# EUROPÄISCHE PATENTANMELDUNG

(11) **EP 4 641 442 A1**
(43) Veröffentlichungstag der Anmeldung: **29.10.2025**
(21) Anmeldenummer: 24172349.3
(22) Anmeldetag: 25.04.2024
(51) Int. Cl.: G06N 3/02, G06N 20/00, G06F 8/70

(54) **UNTERSTÜTZUNG DER LÖSUNG EINER TECHNISCHEN AUFGABE DURCH EIN LARGE LANGUAGE MODEL**

(71) Anmelder: Siemens Aktiengesellschaft, 80333 München (DE)
(72) Erfinder: Buckley, Mark, 81829 München (DE); Hasan, Rakebul, 84036 Landshut (DE); Hildebrandt, Marcel, 80634 München (DE); Mogoreanu, Serghei, 81827 München (DE)
(74) Vertreter: Siemens Patent Attorneys

(57) **Zusammenfassung**

Die Erfindung betrifft ein computerimplementiertes Verfahren zur Unterstützung der Lösung einer technischen Aufgabe durch ein erstes Large Language Model (B), bei dem aus einer Datenbank (A) zur Speicherung von Prompts (E) ein zu der technischen Aufgabe gehöriger Prompt (E) dem ersten Large Language Model (B) zur Verfügung gestellt wird. Es werden erste Informationen (IA) betreffend eine Interaktion eines Nutzers mit dem ersten Large Language Model (B) im Rahmen der Lösung der technischen Aufgabe gespeichert und einem zweiten Large Language Model (D) zur Verfügung gestellt. Das zweite Large Language Model (D) erarbeitet dann einen neu formulierten Prompt (E-UP) zu der technischen Aufgabe.

## Beschreibung

### Technisches Gebiet

Die Erfindung betrifft die Unterstützung der Lösung einer technischen Aufgabe durch ein Large Language Model.

### Technischer Hintergrund

In letzter Zeit haben LLMs (Large Language Models, deutsch: große Sprachmodelle) neue Fähigkeiten und eine Generalisierbarkeit für ein breites Aufgabenspektrum für eine Vielzahl von Domänen gezeigt. Daher wird der Einsatz von LLMs zur Unterstützung der Bewältigung technischer Probleme und Fragestellungen im industriellen Kontext immer beliebter. Aufgrund ihres Verständnisses natürlicher Sprache eignen sie sich für viele industrielle Anwendungen. So können beispielsweise Industrien, welche große Mengen von Daten analysieren, um technische Erkenntnisse zu gewinnen, Vorhersagen zu treffen oder Muster zu erkennen, vom Einsatz von LLMs profitieren.

Bei einem LLM handelt es sich um eine künstliche Intelligenz in Form eines maschinellen Lernmodells, das darauf trainiert ist, natürliche Sprache zu verstehen und zu generieren. LLMs sind in der Lage, verschiedene sprachliche Aufgaben zu lösen. Beispiele für derzeit bekannte LLMs sind GPT (Generative Pretrained Transformer) Modelle, wie GPT-3 und GPT-4, die von OpenAI entwickelt wurden und bei ChatGPT und Microsoft Copilot verwendet werden, sowie Googles BERT (Bidirectional Encoder Representations from Transformers). Derartige Sprachenmodelle haben die Fähigkeit zur Generierung von Sprache für allgemeine Zwecke.

Der Nutzer interagiert mit dem LLM durch Eingabe von Prompts. Hierbei handelt es sich um eine Texteingabe, die das Modell verwendet, eine Antwort zu generieren. Ein Prompt kann eine Frage, eine Aufforderung, eine Beschreibung oder irgendeine Form von Text sein, der dem Modell mitteilt, was gewollt ist. Die Ausgabe des LLM antwortet auf den gegebenen Kontext oder baut darauf auf. Die Qualität des Prompts hat einen erheblichen Einfluss auf die Ausgabe des Modells. Ein gut formulierter Prompt führt in der Regel zu einer präzisen und angemessenen Antwort, während ein unklarer oder widersprüchlicher Prompt möglicherweise zu unbefriedigenden und teils sogar falschen Ergebnissen führen kann.

### Zusammenfassung und Ausgestaltungen der Erfindung

Der Erfindung liegt die Aufgabe zugrunde, ein computergestütztes Verfahren zur Unterstützung der Lösung einer technischen Aufgabe durch ein Large Language Model aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechendes computerlesbares, vorzugsweise nichtflüchtiges, Speichermedium, und ein entsprechendes Übertragungssignal. Vorteilhafte Ausgestaltungen und Weiterbildungen sind Gegenstand von Unteransprüchen.

Das computerimplementierten Verfahren dient der Unterstützung der Lösung einer technischen Aufgabe durch ein erstes Large Language Model. Hierzu wird aus einer Datenbank zur Speicherung von Prompts ein zu der technischen Aufgabe gehöriger Prompt dem ersten Large Language Model zur Verfügung gestellt. Es werden erste Informationen gespeichert betreffend eine Interaktion eines Nutzers mit dem ersten Large Language Model im Rahmen der Lösung der technischen Aufgabe. Die ersten Informationen werden einem zweiten Large Language Model zur Verfügung gestellt. Dann wird von dem zweiten Large Language Model ein neu formulierter Prompt zu der technischen Aufgabe empfangen.

Ein Beispiel für eine technische Aufgabe ist die Auswertung eines PPCL-Codes (PPCL: Powers Process Control Language) für die Gebäudeautomatisierung.

Andere Beispiele sind technische Aufgabe in verschiedensten Industriebereichen, z. B. die Analyse serialisierter Rohrleitungs- und Instrumentierungsdiagramme (englisch: serialized piping & instrumentation diagrams, P&IDs), um für die Prozessindustrie eine im Diagramm beschriebene Anlage besser zu verstehen, oder in der Elektrotechnik die Analyse von Schaltplänen, oder beim Maschinenbau die Analyse von Gerätehandbüchern und Wartungsprotokollen.

Das Verfahren eignet sich besonders für technische Aufgaben, die wiederkehrend auftreten, d.h. verschiedene Nutzer haben die gleiche technische Fragestellung. In diesem Fall ist es sinnvoll, einen verbesserten Prompt zu erarbeiten, der dazu führt, dass die technische Aufgabe durch das erste Large Language Model rasch gelöst werden kann. Der Aufwand für die Erarbeitung des verbesserten Prompts lohnt sich also, da einerseits davon ausgegangen werden kann, dass dieser Prompt von mehreren Nutzern verwendet werden wird, und andererseits davon, dass dieser Prompt es den Nutzern ermöglicht, zufriedenstellende Antworten von dem ersten Large Language Model zu erhalten. Ansonsten würde jeder Nutzer einzeln versuchen, einen Prompt zu erstellen, der dazu führt, dass zumindest nach einigen Nachfragen seine Frage von dem LLM beantwortet wird.

Die automatische Erarbeitung des verbesserten Prompts basiert auf ersten Informationen betreffend eine Interaktion eines Nutzers mit dem ersten Large Language Model im Rahmen der Lösung der technischen Aufgabe. Eine solche Interaktion umfasst Eingaben des Nutzers und Ausgaben des ersten Large Language Models. Anhand dieses Kommunikationsverlaufs können Schlüsse gezogen werden, auf welche Art der ursprünglich verwendete Prompt verbessert werden könnte, um schneller zu einem zufriedenstellenden Ergebnis zu gelangen.

Um einen neu formulierten Prompt zu erhalten, werden die ersten Informationen betreffend eine Interaktion einem zweiten Large Language Model zur Verfügung gestellt. Dieses erarbeitet einen verbesserten Prompt und gibt diesen aus.

Dem ersten Large Language Model kann zusätzlich zu dem Prompt ein Dokument zur Verfügung gestellt werden, auf welches sich die technische Aufgabe bezieht. Dies ist vorteilhaft, da verschiedene Nutzer zwar die gleiche technische Fragestellung haben können, diese aber in unterschiedlichem Kontext entsteht. Dieser unterschiedliche Kontext kann dann durch das Dokument zum Ausdruck gebracht werden. Beispielsweise kann es sich bei dem Dokument um einen Softwareabschnitt handeln. Vorzugsweise ist das Dokument nicht in der Datenbank gespeichert, welche der Speicherung der Prompts dient. In diesem Fall existiert die Datenbank, welche die Prompts für die technischen Aufgaben enthält, welche von jedem Nutzer verwendet werden, wobei zusätzlich ein Nutzer die technische Aufgabe dadurch individualisiert, dass er aus einem eigenen Speicher das Dokument hinzufügt und somit den Kontext für die technische Aufgabe ergänzt.

In der Datenbank kann der zu der technischen Aufgabe gehörige Prompt durch den neu formulierten Prompt ersetzt werden. Wenn ein Nutzer später nach einem Prompt für die entsprechende Aufgabe sucht, kann er hierdurch gleich auf einen gegenüber dem ursprünglichen Prompt verbesserten Prompt zugreifen und diesen dem ersten Large Language Model präsentieren.

Die gespeicherten ersten Informationen können umfassen:
- den zu der technischen Aufgabe gehörigen Prompt,
- eine Ausgabe des ersten Large Language Models auf den Prompt hin,
- zumindest eine dem ersten Large Language Model auf diese Ausgabe hin zur Verfügung gestellte Zusatzinformation,
- zumindest eine weitere Ausgabe des ersten Large Language Models auf die zumindest eine Zusatzinformation hin.

Vorzugsweise enthalten die gespeicherten ersten Informationen die vollständige Kommunikation zwischen dem Nutzer und dem ersten Large Language Model. Diese vollständige Kommunikation beginnt mit dem anfänglich dem ersten Large Language Model zur Verfügung gestellten Prompt und endet mit einer finalen Ausgabe des ersten Large Language Models. Dazwischen existieren eine oder mehrere Eingaben des Nutzers und jeweils zugehörige Ausgaben des ersten Large Language Models.

Ferner können zweite Informationen gespeichert werden betreffend eine Qualitätsbeurteilung des Nutzers bezogen auf die Lösung der technischen Aufgabe durch das erste Large Language Model. Diese Beurteilung kann sich auf die letzte Ausgabe des ersten Large Language Models beziehen, und gegebenenfalls zusätzlich auch auf die Interaktion, welche bis zu dieser letzten Ausgabe erfolgte. Die Qualitätsbeurteilung ermöglicht es, verschiedene der ersten Informationen miteinander vergleichbar zu machen.

Es können betreffend die gleiche technische Aufgabe eine Mehrzahl von ersten Informationen gespeichert und eine Teilmenge der Mehrzahl der ersten Informationen dem zweiten Large Language Model zur Verfügung gestellt werden. Die Verwendung nur einer Teilmenge der ersten Informationen zur Erstellung eines verbesserten Prompts hat den Vorteil, dass besonders gute Interaktionen herangezogen werden, um den Prompt zu verbessern.

Betreffend die gleiche technische Aufgabe kann eine Mehrzahl von ersten und zweiten Informationen gespeichert werden. Dann kann eine Teilmenge der Mehrzahl der ersten Informationen unter Berücksichtigung der jeweils zugehörigen zweiten Informationen ausgewählt und die Teilmenge der Mehrzahl der ersten Informationen dem zweiten Large Language Model zur Verfügung gestellt werden. Die zweiten Informationen ermöglichen in diesem Fall eine geeignete Auswahl derjenigen ersten Informationen, die der Erarbeitung eines verbesserten Prompts zugrunde gelegt werden sollen.

Es können eine Mehrzahl von technischen Aufgaben zur Auswahl angeboten werden, zu welchen jeweils ein Prompt in der Datenbank enthalten ist, so dass nach Empfang einer Auswahl-Information der zur ausgewählten Aufgabe gehörige Prompt dem ersten Large Language Model zur Verfügung gestellt werden kann. Z.B. kann einem Nutzer über ein Auswahlmenü gezeigt werden, welche technischen Aufgaben durch die in der Datenbank enthaltenen Prompts adressiert werden. Aus Sicht des Nutzers liegt somit eine Sammlung von technischen Aufgaben vor, für welche er keinen Prompt selbst formulieren muss, wenn er ein Large Language Model zur Lösung der Aufgabe verwenden möchte.

Dem zweiten Large Language Model können die ersten Informationen zur Verfügung gestellt werden zusammen mit Anweisungsinformationen zur Erstellung des neu formulierten Prompts. Die Anweisungsinformationen entsprechen einem Prompt für das zweite Large Language Model. Mit diesem Prompt wird es angewiesen, einen verbesserten Prompt für die Lösung der technischen Aufgabe auszugeben.

Bei dem ersten Large Language Model und dem zweiten Large Language Model kann es sich um das gleiche Large Language Model handeln. Insbesondere kann ein Large Language Model verwendet werden, welches für verschiedenste Zwecke einsetzbar und/oder allgemein zugänglich ist.

Die Vorrichtung oder das System zur Datenverarbeitung umfasst Mittel zur Ausführung des erläuterten Verfahrens. Insbesondere kann eine Nutzerschnittstelle vorhanden sein für die Auswahl der technischen Aufgabe durch einen Nutzer und für die Interaktion des Nutzers mit dem ersten Large Language Model, sowie eine Schnittstelle für die Kommunikation mit dem ersten Large Language Model und dem zweiten Large Language Model, sowie die Datenbank zur Speicherung von Prompts.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Zu diesem Zweck können Hardware-Komponenten und/oder Software-Komponenten eingesetzt werden. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Es können eines oder mehrere miteinander zusammenwirkende Computerprogramme zum Einsatz kommen, wobei ein Computerprogramm insbesondere ein Software Modul sein kann, eine Software Library, eine einzelne Prozedur, eine Subroutine, eine Funktion oder jede andere Art von Code, welcher die jeweilige Funktion implementiert. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird überwiegend im Singular "das Computergrogramm" und "der Computer" formuliert.

### Exemplarische Ausführungsbeispiele der Zeichnung

Fig. 1 einen Ablauf zur Erstellung von verbesserten aufgabenspezifischen Prompts,
Fig. 2 ein erstes zur Implementierung des in Figur 1 gezeigten Ablaufs geeignetes System,
Fig. 3 ein zweites zur Implementierung des in Figur 1 gezeigten Ablaufs geeignetes System.

### Detaillierte Beschreibung der Ausführungsbeispiele

Bei Verwendung eines LLM ist die Qualität der Ausgabe des LLM stark von der Qualität des Input, also des Prompts des Nutzers, abhängig, welcher dem LLM zur Verfügung gestellt wird. Beim Prompt Engineering geht es darum, geeignete Texteingaben zu formulieren, die das Modell möglichst gut dazu anleiten, die gewünschten Aufgaben auszuführen oder die gewünschten Ausgaben zu generieren. Das Prompt Engineering kann dabei das Zur-Verfügung-Stellen von zusätzlichem Kontext beinhalten, wie z.B. die Definition von Ausdrücken, die Umformulierung der Fragestellung, oder das Vorgeben von Parametern für die Antwort. Das Ziel hierbei ist die Optimierung der Interaktion mit dem Modell, so dass die relevantesten und korrektesten Antworten ausgegeben werden.

Wenn im industriellen Kontext Prompt Engineering erfolgen soll, trifft man insbesondere auf die folgenden Schwierigkeiten:
- Zusätzlich zur Kenntnis des technischen Gebiets, welches die Fragestellung betrifft, erfordert effektives Prompt Engineering auch ein Verständnis darüber, wie das LLM arbeitet.
- Es ist arbeits- und zeitaufwendig, ständig händisch die Prompts zu verbessern und zu optimieren, wodurch wertvolle Ressourcen für andere Zwecke nicht zur Verfügung stehen.
- LLMs passen sich üblicherweise den Entwicklungen von Sprache und Nutzerverhalten an. Diesen Veränderungen muss auch das Prompt Engineering Rechnung tragen.

Im Folgenden wird ein automatisierter Ansatz zur Verbesserung von aufgabenspezifischen Prompts für LLMs vorgestellt. Ein Nutzer kann dann diesen verbesserten aufgabenspezifischen Prompt dem LLM zur Verfügung stellen, um eine für ihn befriedigende Antwort zu erhalten. Der verbesserte aufgabenspezifische Prompt wird hierbei von einem LLM ermittelt, wobei diesem LLM mehrere Beispiele von erfolgreichen Interaktionen zwischen einem Nutzer und einem LLM zur Verfügung gestellt werden. Diese erfolgreichen Interaktionen betreffen jeweils die gleiche Aufgabe, wobei der Nutzer jeweils zusätzliche Instruktionen oder Klarstellungen oder Kontext zur Verfügung gestellt hat. Die durch diesen Ansatz mit dem verbesserten aufgabenspezifischen Prompt adressierte Situation ist diejenige, dass der Nutzer zwar weiß, welche Informationen er von dem LLM erhalten möchte, dies aber nicht in geeigneter Weise in einem Prompt verbalisieren kann.

Diese Vorgehensweise der automatischen Erstellung eines verbesserten aufgabenspezifischen Prompts kann als Promptvorhersage bezeichnet werden. Dies bedeutet vereinfacht ausgedrückt, dass ein LLM gefragt wird, wie die Frage ursprünglich gestellt hätte werden müssen, um das als zufriedenstellend angesehene Ergebnis zu erhalten, ohne dass weitere Instruktionen nötig gewesen wären. Diese Promptvorhersage kann dadurch erfolgen, dass Beispiele von Interaktionen zur Verfügung gestellt werden, an deren Ende eine bestimmte Aufgabe erfolgreich von dem LLM gelöst wurde. Diese Aufgabe war bei den erfolgreichen Beispielen jeweils die gleiche, wobei im Rahmen der Interaktionen von dem Nutzer jeweils zusätzliche Informationen gegeben wurden.

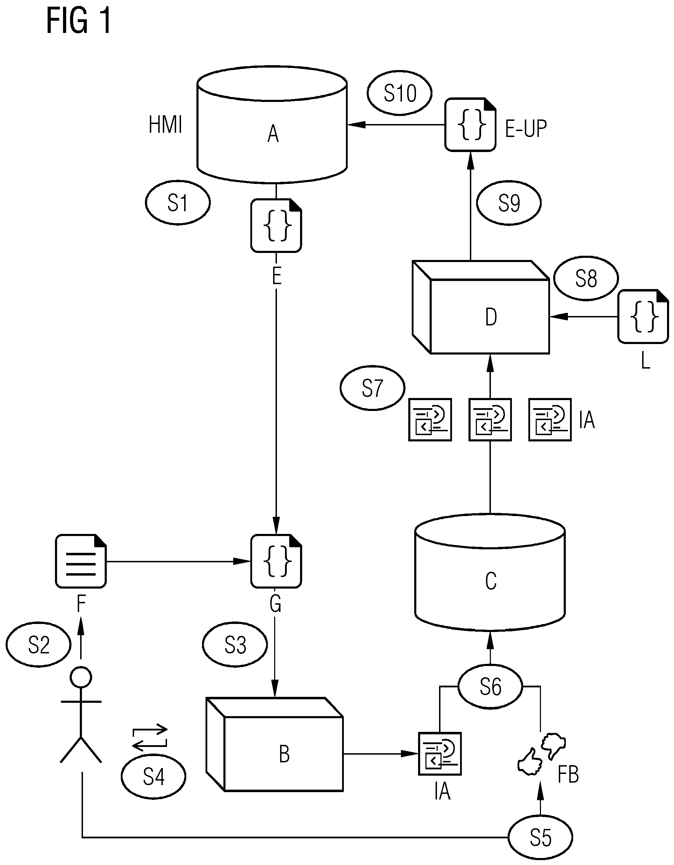

Figur 1 zeigt einen Ablauf zur Erstellung von verbesserten aufgabenspezifischen Prompts.

In Schritt S1 sucht der Nutzer die Aufgabe aus, die er gelöst haben möchte. Hierbei handelt es sich um eine domänenspezifische Aufgabe. Prompts für diese Aufgaben sind in der Datenbank A gespeichert. Der Nutzer muss den Prompt für die für ihn relevante domänenspezifische Aufgabe also nicht selbst formulieren; vielmehr wird der aufgabenspezifische Prompt E nach Auswahl der domänenspezifischen Aufgabe durch den Nutzer von der Datenbank A ausgegeben.

Beispielhaft wird als technische Domäne, innerhalb welcher der Nutzer eine Aufgabe gelöst haben möchte, die Gebäudeautomatisierung für ein Smart Building betrachtet. Dem Nutzer liege ein PPCL-Code vor. Diese Art von Code wird normalerweise von Technikern im Bereich der Gebäudeautomatisierung verwendet, um verschiedene Funktionen eines Gebäudekontrollsystems zu steuern und anzupassen. Der PPCL-Code kann dementsprechend eingesetzt werden, um verschiedene Aspekte der Gebäudesteuerung zu programmieren, wie zum Beispiel die Reaktion auf bestimmte Ereignisse, die Steuerung von Beleuchtung, Heizung, Lüftung, Klimaanlage, die Überwachung von Sensoren usw. Anstatt diesen Code selbst analysieren zu müssen, möchte der Nutzer ein LLM nach der Lösung für seine hierauf bezogene Fragestellung befragen. Beispielhaft wäre eine einfache Frage des für die Gebäudeautomatisierung zuständigen Technikers, welche Sensoren in einem Gebäudekomplex installiert sind.

Im Folgenden werden konkrete Beispiele für aufgabenspezifische Prompts bezogen auf einen PPCL-Code wiedergegeben:
Beispiel 1: FDD-Regeln - der Nutzer sucht nach FDD-Regeln, welche dem PPCL-Code zugrunde liegen

Der aufgabenspezifische Prompt hierfür könnte lauten:
Erstelle anhand des beigefügten PPCL-Codes, der das Steuerungssystem eines intelligenten Gebäudes spezifiziert, einen Satz FDD-Regeln. Kurz gesagt legen FDD-Regeln spezifische erwartete Bedingungen für Gebäudesysteme und klare Grenzwerte oder
Performanzbereiche fest. Bitte schließe nur FDD-Regeln ein, die im Code implementiert sind. Betrachte als Hintergrundinformation die folgende Erklärung und Beispiele der FDD-Tools und -Regeln:
FDD-Regeln (Fault Detection and Diagnostics) sind eine Reihe von Richtlinien zur Identifizierung und Diagnose von Fehlern in HVAC Systemen (HVAC: Heating, Ventilation, and Air Conditioning, Heizungs-, Lüftungs- und Klimaanlagen). Diese Regeln basieren auf der Untersuchung von Fehlern in HVAC-Systemen und auf der Entwicklung hierarchischer Beziehungen zwischen verschiedenen Geräten und Prozessen innerhalb des Systems. Der Kern von FDD liegt im Verständnis der Beziehungen zwischen "Quelle" und "Last", die durch Luft oder Wasser erfolgen können.

FDD-Regeln werden auf verschiedene hierarchische Beziehungen angewendet, um Fehlerberichte und Rohdaten zu sammeln. Beispiele für diese Beziehungen sind eine Kühlwasseranlage, die Lüftungsgeräte mit gekühltem Wasser versorgt, und ein Lüftungsgerät zur Zufuhr von Zuluft zu Endgeräten. Die Anwendung von FDD-Regeln variiert je nach Systemkonfiguration, wie z.B. das Vorhandensein einer Kältemaschine, eines Heizkessels, von Lüftungsgeräten und Endgeräten, sowie vom Zustand der Geräte (z. B. Aus, Hochfahren oder steady-state).

Für bestimmte Szenarien werden unterschiedliche Sätze von FDD-Regeln angewendet, z. B. abgestuftes Heizen und Kühlen direkt am Lüftungsgerät oder Einzelzonen-Lüftungsgeräte. Durch die Verwendung dieser Regeln können HVAC-Systeme besser gewartet und optimiert werden, was zu einer verbesserten Performanz und Energieeffizienz führt.

Drei Beispiele für FDD-Regeln sind:
1. Eine Regel zur Erkennung unzureichender Kühlleistung: diese FDD-Regel überwacht die Vor- und Rücklauftemperaturen von Kaltwasser in einer Kaltwasseranlage. Wenn der Unterschied zwischen Vor- und Rücklauftemperatur (auch Delta-T genannt) dauerhaft niedriger als der erwartete Wert ist, kann dies auf ein Problem mit der Kühlleistung des Kühlers hinweisen. Die Regel kann dabei helfen, Probleme wie Verschmutzung im Wärmetauscher, niedrige Kältemittelfüllung oder schlechte Kompressorleistung zu erkennen.
2. Eine Regel zur Erkennung eines fehlerhaften Luftstroms in Lüftungsgeräten: diese FDD-Regel vergleicht den tatsächlichen Luftstrom in einem Lüftungsgerät (AHU: air handling unit) mit dem erwarteten oder erforderlichen Luftstrom. Wenn die tatsächliche Luftstromrate dauerhaft niedriger oder höher als der erwartete Wert ist, kann dies auf Probleme wie verstopfte Filter, eine Fehlfunktion des Lüfters oder eine unsachgemäße Steuerung des Systems mit variabler Luftmenge hinweisen. Diese Regel trägt dazu bei, sicherzustellen, dass die Lüftungsanlage für ausreichende Belüftung sorgt und die gewünschte Raumluftqualität aufrechterhält.
3. Eine Regel zur Identifizierung fehlerhafter Sensoren: diese FDD-Regel prüft auf Inkonsistenzen bei Sensormesswerten, wie z. B. Temperatur-, Feuchtigkeits- oder Drucksensoren innerhalb des HVAC-Systems. Wenn der Messwert eines Sensors erheblich vom erwarteten Wert abweicht oder ein unregelmäßiges Verhalten zeigt, kann dies auf einen fehlerhaften Sensor oder ein Problem mit der Sensorkalibrierung hinweisen. Die Identifizierung und Behebung fehlerhafter Sensoren sind entscheidend für die Aufrechterhaltung einer ordnungsgemäßen Steuerung und die Optimierung der Performanz von HVAC-Systemen.

### Beispiel 2: Punktnamen - der Nutzer sucht nach den Punktbezeichnungen wie z.B. Temperatursensoren, Belegungssensoren, Lichtsteuerungen, HVAC-Ausrüstung, usw., welche im PPCL-Code eine technische Funktion erfüllen

Der aufgabenspezifische Prompt hierfür könnte lauten:
Extrahiere anhand des beigefügten PPCL-Codes, der das Steuerungssystem eines intelligenten Gebäudes spezifiziert, eine Liste aller Punktnamen und eine Beschreibung ihrer Funktionen. Die Ausgabe sollte in Form einer durch Aufzählungszeichen getrennten Liste erfolgen, wobei jedes Aufzählungszeichen einen anderen Punktnamen angibt, gefolgt von der Beschreibung der Funktion. Die folgenden Richtlinien können beim Extrahieren der Punktnamen hilfreich sein.

Beim Schreiben von PPCL-Skripten gelten die folgenden Regeln und Konventionen:
- Punktnamen, die mit Zahlen beginnen, müssen das At-Zeichen (@) voranstellen.
- APOGEE PPCL-Programme verwenden einen zugewiesenen Namen. Gültige Namen können 1 bis 30 Zeichen enthalten, einschließlich: A-Z, a-z, 0-9, Leerzeichen (), Punkte (.), Kommas (,), Bindestriche (-), Unterstriche (_) und Apostrophe (').
- In Programmen verwendete Punktnamen sollten aussagekräftig sein und die Funktion beschreiben, für die sie verwendet werden. Beispielsweise könnte ein Punktname, der die Außenlufttemperatur überwacht, den Namen OATEMP haben.
- Bei der Verwendung in PPCL wird der Wert der Berechnung ermittelt und zur späteren Bezugnahme einem Punktnamen oder einer lokalen Variablen zugewiesen. Verfolge die Verwendung der lokalen Variablen bis zur endgültigen Kontrollentscheidung und bis zum Punktnamen, an dem die lokale Variable übersetzt wird.
- Verwende Kommentare, um zusätzliche Informationen bereitzustellen: verwende bei Bedarf Kommentare, um mehr Kontext oder Erläuterungen zu einem bestimmten Punkt bereitzustellen. Dies kann dazu beitragen, den Zweck eines Punktes zu verdeutlichen, ohne dass der Punktname übermäßig lang wird. Wenn Programmierzeilen auskommentiert sind, verwende diese Informationen nicht, um Beschreibungen zu Punkten zuzuweisen.
- Mit der DEFINE-Anweisung kann der Benutzer Abkürzungen für (Teile von) Punktnamen definieren, die im gesamten Skript verwendet werden. Die Syntax lautet DEFINE(abbrev, x), wobei "abbrev" die Abkürzungen sind, die in anderen PPCL-Anweisungen für die tatsächliche Zeichenfolge "x" verwendet werden sollen.
- Verwende die Position von Punkten in Anweisungen, um die Optionen für das Funktions-Tag zu verfeinern. Wenn sich beispielsweise ein Punkt im Steuervariablen-Slot einer Schleifenanweisung befindet, muss es sich um einen Sollwert, einen Schleifenausgang oder ein Befehlssignal (binär oder analog) handeln und darf kein Temperatur-, Positions- oder Statuspunkt sein.
- Verwende die Wertebereiche in Schleifen-, Tabellen- oder Set-Anweisungen, um zu bestimmen, ob der Punkt analog oder binär ist, und verwende diese Informationen, um das Funktions-Tag zu bestimmen.

### Beispiel 3: Operationssequenz - der Nutzer sucht nach der Reihenfolge der Betriebsabläufe, wie sie im bereitgestellten PPCL-Code dargestellt sind

Der aufgabenspezifische Prompt hierfür könnte lauten:
Leite anhand des beigefügten PPCL-Codes, der das Steuerungssystem eines intelligenten Gebäudes spezifiziert, die Operationssequenz ab und notiere die Abfolge der Operationen sowohl im Punktstil als auch im Absatzstil (beachte die folgenden Richtlinien).

Bitte schließe nur Operationen ein, die im Code implementiert sind.

Grundsätzlich sollte die Operationssequenz die grundlegenden Absichten des Technikers darlegen, wie das/die mechanische(n) System(e) funktionieren sollen, wie sie für ihren Betrieb ausgelegt sind und wie sie gesteuert werden sollten, um dieses Ziel zu erreichen. Die Reihenfolge sollte eine direkte Widerspiegelung des mechanischen Designs sein. Eine Operationssequenz, die die grundlegenden Entwurfsabsichten des Ingenieurs nicht vermittelt, führt nur dazu, dass der Beschaffungsprozess und die Entwurfs- und Einreichungsprozesse der Steuerungssysteme komplizierter werden.

Eine typische Operationssequenz hat typischerweise die Form eines von zwei Stilen: Punktstil oder Absatzstil. Eine im Punktstil geschriebene Sequenz würde wie folgt aussehen:
1. Der programmierbare Thermostat zeigt den Belegtmodus an.
2. Der Zuluftventilator des Dachgeräts läuft kontinuierlich.
3. Der Thermostat schaltet das Heizen und Kühlen je nach Bedarf um, um die Temperatursollwerte im Aufenthaltsraum aufrechtzuerhalten.

Die gleiche im Absatzstil geschriebene Sequenz würde wie folgt aussehen:
Wenn der programmierbare Thermostat den Belegtmodus anzeigt, läuft der Zuluftventilator der Dacheinheit kontinuierlich, und der Thermostat schaltet die Heizung und Kühlung nach Bedarf um, um die Temperatursollwerte für den belegten Raum aufrechtzuerhalten.

Spezifizierte Sequenzen werden in Lang- oder Kurzform vorliegen, je nach den Vorgaben des jeweiligen Technikers und seiner Absichten. Eine Kurzform der Sequenz eines thermostatisch gesteuerten Abluftventilators könnte wie folgt lauten: der Abluftventilator des Generatorraums soll durch einen im Raum montierten Thermostat gesteuert werden.

### Beispiel 4: Netzwerkstruktur - der Nutzer sucht nach der logischen Verbindung zwischen den technischen Komponenten, welche im Code eine Rolle spielen

Der aufgabenspezifische Prompt hierfür könnte lauten:
Gebe die Netzwerkstruktur für den beigefügten PPCL-Code an, der das Steuerungssystem eines intelligenten Gebäudes spezifiziert.

Konvertiere die Netzwerkstruktur in networkx json, verwende "nodes" für Knoten, bei denen jeder Knoten eine ganzzahlige ID und eine Bezeichnung hat, und verwenden Sie "link" für Kanten. Falls nicht genügend Informationen vorliegen, um das Diagramm zu erstellen, wandle alle identifizierten Punktnamen in Knoten im Diagramm um und schreibe nichts anderes.

Wenn beispielsweise zwei Punktnamen %A1%HSA und %A1%HSA ohne Verbindung zwischen ihnen extrahiert werden, erstelle ein Diagramm mit zwei Knoten, aber ohne Kanten. Schreibe nichts anderes als das JSON-Diagramm!
Konkret: Graph = {'directed': True, 'multigraph': False, 'graph': {}, 'nodes': [{'id': '%A1 %HSA'}, {'id': '%A1%HSA'}], 'links': []}

Der Nutzer kann hierbei auf die Datenbank A über eine Nutzerschnittstelle HMI zugreifen. Beispielsweise kann er hierüber eine Dropdown-Liste ansehen, welche eine Kurzform der domänenspezifischen Aufgaben anzeigt, so dass über diese Liste eine Auswahl der passenden domänenspezifischen Aufgabe möglich ist. Nach erfolgter Auswahl wird der zugehörige aufgabenspezifische Prompt E von der Datenbank A zur Verfügung gestellt.

Im Schritt S2 lädt der Nutzer das Input-Dokument F hoch, welches den Kontext bereitstellt, in welchem die domänenspezifische Aufgabe zu lösen ist. Bei den oben aufgeführten Beispielen handelt es sich bei dem Input-Dokument F jeweils um einen PPCL-Code oder - Codeabschnitt.

Im Schritt S3 werden der Ausgangs-Prompt G bestehend aus der Kombination des Input-Dokuments F und dem aufgabenspezifische Prompt E dem LLM B als Input zur Verfügung gestellt. Bei dem LLM B kann es sich um ein an sich beliebiges Large Language Model handeln, welches der Nutzer zur Lösung seiner domänenspezifischen Aufgabe verwenden möchte.

Das LLM B generiert die Antwort auf den Ausgangs-Prompt G und gibt diese im Schritt S4 an den Nutzer aus. Falls der Nutzer mit dem Output des LLM B nicht zufrieden ist, kann im Schritt S4 optional der Nutzer mit dem LLM B interagieren, indem er dem LLM B zusätzlichen Kontext oder Instruktionen zur Verfügung stellt und hierzu die entsprechenden Antworten erhält.

Wenn der Nutzer mit dem Output des LLM B zufrieden ist und somit das Endergebnis des LLM B erhalten hat, bewertet er im Schritt S5 seine Zufriedenheit mit diesem LLM B mittels der Feedback-Information FB. Die Feedback-Information FB kann im einfachsten Fall eine Angabe von Gut/Schlecht sein, oder eine Angabe eines einzelnen Zahlenwertes auf einer vorgegebenen Skala. Vorzugsweise wird eine Reihe von Fragen vom Nutzer beantwortet, deren Antworten dann die Feedback-Information FB darstellen. Z.B. könnten die folgenden Fragen verwendet werden:
- hat die Antwort des LLM ihre Frage beantwortet? Antwort auf einer Skala von 1-5.
- haben Sie durch die Verwendung des LLM Zeit gespart? Antwort auf einer Skala von 1-5.
- sind die Antworten des LLM technisch korrekt? Antwort auf einer Skala von 1-5.
- wie einfach war es, das LLM zu korrigieren / neu zu instruieren? Antwort auf einer Skala von 1-5.
- was mussten Sie tun, um die Antworten des LLM zufriedenstellend zu machen? Antwort in Freitext.

Im Schritt S6 werden die Feedback-Information FB und der Verlauf der Interaktion IA zwischen dem Nutzer und dem LLM B, d.h. alle Ein- und Ausgaben beginnend mit dem Ausgangs-Prompt G und endend mit der finalen Antwort des LLM B, der Interaktions-Datenbank C übergeben. Die Interaktions-Datenbank C sammelt und speichert abgeschlossene Interaktionen zwischen Nutzern und dem LLM B. Die hier gespeicherten Informationen zu abgeschlossenen Interaktionen enthalten für jede Interaktion eine Angabe der domänenspezifischen Aufgabe, das vom Nutzer hierzu hochgeladene Input-Dokument F, den Verlauf der Interaktion IA, sowie die Feedback-Information FB.

Wenn in der Interaktions-Datenbank C eine ausreichende Anzahl abgeschlossener Interaktionen zu einer bestimmten domänenspezifischen Aufgabe vorhanden ist, oder nach Ablauf einer bestimmten Zeitspanne wie nach einem Monat, werden diese oder eine Auswahl hiervon im Schritt S7 dem LLM D übergeben. Wird nur eine Auswahl an abgeschlossenen Interaktionen übergeben, so erfolgt diese Auswahl unter Verwendung der jeweiligen Feedback-Information FB. So bietet es sich an, die als gemäß der Feedback-Information FB am besten bewerteten abgeschlossenen Interaktionen weiterzuleiten. Z.B. können die besten 10% der abgeschlossenen Interaktionen verwendet werden. Wenn die Feedback-Information FB wie oben beispielhaft gezeigt mehrere Werte umfassen, so muss eine Kombination dieser Werte erfolgen, um verschiedene Feedback-Informationen FB vergleichbar zu machen.

Bei dem LLM D kann es sich um ein an sich beliebiges Large Language Model handeln, welches auch mit dem LLM B übereinstimmen kann. Das LLM D soll die Aufgabe lösen, einen gegenüber dem aufgabenspezifische Prompt E verbesserten aufgabenspezifischen Prompt E-UP zur Verfügung zu stellen.

Im Schritt S8 wird dem LLM D der Prompt L zur Verfügung gestellt, mit welchem es angewiesen wird, unter Verwendung der von der Interaktions-Datenbank C empfangenen abgeschlossenen Interaktionen IA eine neue Version des aufgabenspezifischen Prompts E zu ermitteln. Der Prompt L kann z.B. derart formuliert sein: unter Berücksichtigung der abgeschlossenen Interaktionen, wie hätte der aufgabenspezifische Prompt E formuliert werden sollen, um ohne oder mit nur wenig Interaktion zwischen einem Nutzer und einem LLM eine zufriedenstellende Antwort für den Nutzer zu bewirken? Der Prompt L muss nur einmal erzeugt werden und kann jedes Mal, wenn nach einer neuen Version eines aufgabenspezifischen Prompts gefragt werden soll, herangezogen werden. Der verbesserte aufgabenspezifischen Prompt E-UP wird dann von dem LLM D ermittelt und im Schritt S9 ausgegeben. Der verbesserte aufgabenspezifischen Prompt E-UP wird im Schritt S10 der Datenbank A übergeben, wo er den bisher dort gespeicherten aufgabenspezifischen Prompt E ersetzt.

Falls der aufgabenspezifischen Prompt E kein guter Ausgangspunkt zur Lösung der Aufgabe ist, kann es sein, dass die Interaktion zwischen dem Nutzer und dem LLM B abgebrochen wird, bevor eine zufriedenstellende Antwort des LLM B zur Verfügung steht. In diesem Fall steht für die jeweilige Interaktion keine Feedback-Information FB zur Verfügung. Diese gescheiterte Interaktion kann dennoch in der Interaktions-Datenbank C gespeichert werden, jedoch als "nicht erfolgreich" markiert sein. In diesem Fall sollte auch der jeweilige aufgabenspezifische Prompt E als "nicht erfolgreich" markiert werden und einer Liste von Aufgaben zugefügt werden, deren aufgabenspezifischen Prompts zu verbessern sind.

Die beschriebene Vorgehensweise hilft einem Nutzer, mit einem besseren Prompt eine Frage an ein LLM zu starten. Häufig weiß ein Nutzer nämlich, welche Art von Antwort er erhalten möchte, oder mit welchen Eigenschaften der Output des LLM ausgestaltet sein sollte, es fällt ihm jedoch schwer, dies präzise in Worte zu fassen. Ohne diese präzisen Worte, welche sich in dem Prompt widerspiegeln, wird der Output des LLM nicht den Anforderungen des Nutzers entsprechen. Dadurch, dass bei der Erstellung des verbesserten aufgabenspezifischen Prompts E-UP abgeschlossene Interaktionen, in welchen die Nutzer das LLM dazu gebracht haben, einen zufriedenstellenden Output zu generieren, berücksichtigt werden, ist davon auszugehen, dass bei Eingabe des verbesserten aufgabenspezifischen Prompts E-UP die anfängliche Antwort des LLM bereits zufriedenstellend sein wird, oder dass es zumindest wenig Interaktion zwischen dem Nutzer und dem LLM bedarf, um zu einer zufriedenstellenden Antwort zu gelangen. Die Bereitstellung des präzise formulierten Prompts als Ausgangspunkt erfolgt hierbei nicht etwa durch den Nutzer, indem er an seiner Fragestellung "feilt", sondern vielmehr automatisch durch ein Computerprogramm.

Zu betonen ist, dass zur Generierung des verbesserten aufgabenspezifischen Prompts E-UP keine aufgabenspezifischen Trainingsdaten benötigt werden. Vielmehr wird das benötigte Wissen der Domain Experten ausgenutzt, welche sich in den abgeschlossenen Interaktionen und dem die Zufriedenheit mit dem LLM anzeigenden Feedback der Techniker widerspiegelt.

Von Vorteil ist auch, dass die verbesserten aufgabenspezifischen Prompts E-UP in natürlicher Sprache formuliert sind. Sie können daher ohne Aufwand auf ihre Plausibilität, Sinnhaftigkeit und Qualität überprüft werden.

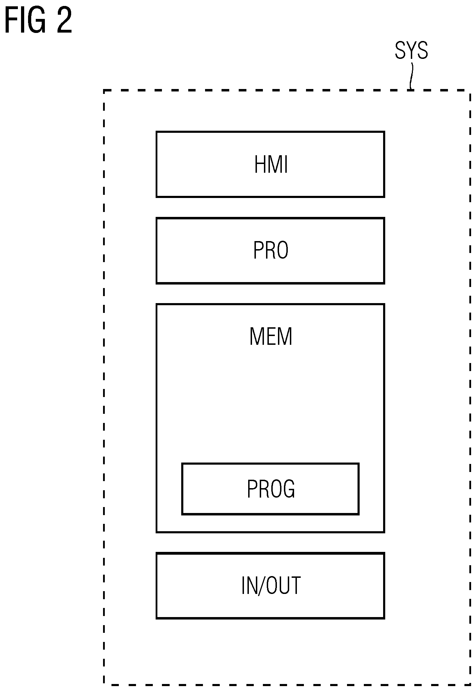

Figur 2 zeigt, wie ein System SYS zur Implementierung des anhand von Figur 1 erläuterten Vorgehens aufgebaut sein kann. Während die im Folgenden näher erläuterten Bestandteile in der Figur einfach gezeigt sind, ist es auch möglich, dass diese in mehrfacher Ausführung vorhanden sind. Während ferner die im Folgenden näher erläuterten Bestandteile in der

Figur als mit einem Kasten umschlossen dargestellt sind, so bedeutet dies nicht, dass diese Bestandteile sich am gleichen Ort befinden müssen; vielmehr kann es sich um ein verteiltes System handeln. Auf diese Weise kann die Funktionalität des Systems SYS auf mehrere, gegebenenfalls hierarchisch miteinander verknüpfte, Systeme oder Komponenten aufgeteilt werden.

Das System SYS umfasst eine Recheneinheit bzw. einen Prozessor PRO, sowie einen Speicher MEM, in welchem ein Computerprogramm PROG abgelegt ist. Ferner umfasst der Speicher MEM auch die in Figur 1 gezeigten Datenbanken, oder kann alternativ auf diese zugreifen. Bei dem Speicher MEM handelt es sich vorzugsweise um ein nicht-flüchtiges computerlesbares Datenspeichermedium. Die Speicherung kann auf jegliche Weise erfolgen, welche geeignet ist, die Auslesbarkeit durch eine Recheneinheit zu gewährleisten, wie durch magnetische Speicherung, z.B. mittels Diskette, optische Speicherung, z.B. mittels CD, magneto-optische Spei-cherung, ROM (Read Only Memory) Speicherung, RAM (Random Ac-cess Memory) Speicherung, EPROM (Erasable Programmable Read-Only Memory), EEPROM (Electrically Erasable Programmable Read-Only Memory), Flash-Memory.

Über die Nutzerschnittstelle HMI kann das System SYS Informationen mit einem Nutzer austauschen und dem Nutzer hierfür eine grafische Nutzeroberfläche zur Verfügung stellen. Ferner ist eine Ein- und Ausgabeeinheit IN/OUT vorhanden, über welche Informationen zwischen dem System SYS und anderen Komponenten wie insbesondere mit LLMs ausgetauscht werden können. Die Nutzerschnittstellen HMI und IN/OUT können auch für die Interaktion des Nutzers mit dem LLM verwendet werden. Beide Schnittstellen HMI und IN/OUT können hierbei auf geeignete Weise ausgestaltet sein, z.B. über Funk oder über Kabel, und die Kommunikation kann über geeignete Standards erfolgen.

Durch Ausführen der Instruktionen des Programms PROG in dem Prozessor PRO werden die Schritte der oben erläuterten Vorgehensweise durchgeführt. Insbesondere werden der aufgabenspezifische Prompt E aus den zuvor erstellten und gespeicherten aufgabenspezifischen Prompts herausgesucht und zusammen mit dem Input-Dokument einem LLM zur Verfügung gestellt; die Interaktion des Nutzers mit dem LLM bis zur finalen Antwort des LLM wird gespeichert; das Feedback des Nutzers zur Zufriedenheit mit den Antworten des LLM wird ebenfalls gespeichert und dazu verwendet, abgeschlossene Interaktionen auszuwählen, welche einem LLM zur Generierung eines verbesserten aufgabenspezifischen Prompts zur Verfügung gestellt werden; dieses LLM wird unter Verwendung eines geeigneten Prompts aufgefordert, den verbesserten aufgabenspezifischen Prompt auszugeben; dieser verbesserte Prompt wird gespeichert, um ihn bei der nächsten Anfrage eines Nutzers zur Lösung der gleichen domänenspezifischen Aufgabe dem LLM vorzugeben.

Aus Sicht des Nutzers handelt es sich bei dem System SYS um ein Produkt, welches eine Reihe domänenspezifischer Aufgaben lösen kann. Der Nutzer wählt eine dieser vorkonfigurierten Aufgaben aus und fügt sein eigenes Input-Dokument hinzu. Dann erhält er eine Antwort und kann diese optional verbessern, indem er weitere Instruktionen gibt oder Nachfragen stellt. Nach Erhalt der finalen Antwort gibt er sein Feedback zur Zufriedenheit, um dem System hiermit zu helfen, für den nächsten Nutzer, welcher die gleiche domänenspezifische Aufgabe in Bezug auf das gleiche oder ein anderes Input-Dokument gelöst haben möchte, einen besseren Prompt zu erstellen.

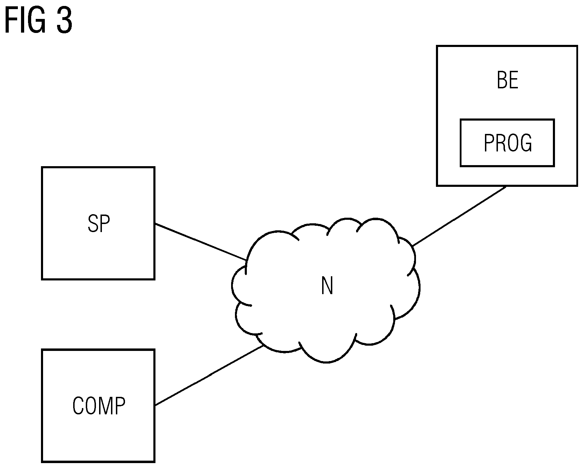

Figur 3 zeigt, wie ein weiteres System zur Implementierung des anhand von Figur 1 erläuterten Vorgehens aufgebaut sein kann. In dieser Ausführungsform speichert die Bereitstellungseinrichtung BE ein Computerprogramm PROG, das Programmanweisungen zur Ausführung des beschriebenen Verfahrens umfasst. Die Bereitstellungseinrichtung BE ist an ein Computernetzwerk oder das Internet N angebunden. Ein Computersystem COMP oder ein mobiles Gerät wie beispielsweise ein Smartphone SP kann das Computerprogramm PROG über das Netz N laden und das Verfahren ausführen, indem es die Programmanweisungen des Computerprogramms PROG ausführt. Alternativ kann das Computersystem COMP oder das mobile Gerät SP die Bereitstellungseinrichtung BE über das Netz N beauftragen, das Verfahren ablaufen zu lassen, wonach die Bereitstellungseinrichtung BE die entsprechenden Ausgaben und/oder Ergebnisse dem Computersystem COMP oder dem mobilen Gerät SP zur Verfügung stellt.

In einer Variante dieser Ausführungsform kann die Bereitstellungseinrichtung BE ein computerlesbares Speichermedium sein, wie beispielsweise eine SD-Karte, das das Computerprogramm PROG speichert und direkt ohne Zwischenschaltung des Netzes N mit dem Computersystem COMP oder dem mobilen Gerät SP verbindbar ist.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Computerimplementiertes Verfahren zur Unterstützung der Lösung einer technischen Aufgabe durch ein erstes Large Language Model (B), bei dem
aus einer Datenbank (A) zur Speicherung von Prompts (E) ein zu der technischen Aufgabe gehöriger Prompt (E) dem ersten Large Language Model (B) zur Verfügung gestellt wird,
erste Informationen (IA) gespeichert werden betreffend eine Interaktion eines Nutzers mit dem ersten Large Language Model (B) im Rahmen der Lösung der technischen Aufgabe,
einem zweiten Large Language Model (D) die ersten Informationen (IA) zur Verfügung gestellt werden,
von dem zweiten Large Language Model (D) ein neu formulierter Prompt (E-UP) zu der technischen Aufgabe empfangen wird.

2. Verfahren nach Anspruch 1, bei dem
die technische Aufgabe die Auswertung eines PPCL-Codes für die Gebäudeautomatisierung betrifft.

3. Verfahren nach Anspruch 1 oder 2, bei dem
dem ersten Large Language Model (B) zusätzlich zu dem Prompt (E) ein Dokument (F) zur Verfügung gestellt wird, auf welches sich die technische Aufgabe bezieht.

4. Verfahren nach einem der Ansprüche 1 bis 3, bei dem
in der Datenbank (A) der zu der technischen Aufgabe gehörige Prompt (E) durch den neu formulierten Prompt (E-UP) ersetzt wird.

5. Verfahren nach einem der Ansprüche 1 bis 4, bei dem
die gespeicherten ersten Informationen (IA) umfassen:
- den zu der technischen Aufgabe gehörigen Prompt (E),
- eine Ausgabe des ersten Large Language Models (B) auf den Prompt (E) hin,
- zumindest eine dem ersten Large Language Model (B) auf diese Ausgabe hin zur Verfügung gestellte Zusatzinformation,
- zumindest eine weitere Ausgabe des ersten Large Language Models (B) auf die zumindest eine Zusatzinformation hin.

6. Verfahren nach einem der Ansprüche 1 bis 5, bei dem
zweite Informationen (FB) gespeichert werden betreffend eine Qualitätsbeurteilung des Nutzers bezogen auf die Lösung der technischen Aufgabe durch das erste Large Language Model (B).

7. Verfahren nach einem der Ansprüche 1 bis 6, bei dem
betreffend die gleiche technische Aufgabe eine Mehrzahl von ersten Informationen (IA) gespeichert werden und
eine Teilmenge der Mehrzahl der ersten Informationen (IA) dem zweiten Large Language Model (D) zur Verfügung gestellt wird.

8. Verfahren nach einem der Ansprüche 1 bis 7, bei dem
betreffend die gleiche technische Aufgabe eine Mehrzahl von ersten (IA) und zweiten (FB) Informationen gespeichert werden,
eine Teilmenge der Mehrzahl der ersten Informationen (IA) unter Berücksichtigung der jeweils zugehörigen zweiten Informationen (FB) ausgewählt wird, und
die Teilmenge der Mehrzahl der ersten Informationen (IA) dem zweiten Large Language Model (D) zur Verfügung gestellt wird.

9. Verfahren nach einem der Ansprüche 1 bis 8, bei dem
eine Mehrzahl von technischen Aufgaben zur Auswahl zur Verfügung gestellt werden, zu welchen jeweils ein Prompt (E) in der Datenbank (A) enthalten ist, und
nach Empfang einer Auswahl-Information der zur ausgewählten Aufgabe gehörige Prompt (E) dem ersten Large Language Model (B) zur Verfügung gestellt wird.

10. Verfahren nach einem der Ansprüche 1 bis 9, bei dem
dem zweiten Large Language Model (D) die ersten Informationen (IA) zur Verfügung gestellt werden zusammen mit einer Aufforderung (L) zur Erstellung des neu formulierten Prompts (E-UP).

11. Verfahren nach einem der Ansprüche 1 bis 10, bei dem
es sich bei dem ersten Large Language Model (B) und dem zweiten Large Language Model (D) um das gleiche Large Language Model handelt.

12. Vorrichtung oder System zur Datenverarbeitung (SYS), umfassend Mittel zur Ausführung des Verfahrens nach einem der Ansprüche 1 bis 11.

13. Vorrichtung oder System zur Datenverarbeitung (SYS) nach Anspruch 12, mit einer Nutzerschnittstelle (HMI) für die Auswahl der technischen Aufgabe durch einen Nutzer und für die Interaktion des Nutzers mit dem ersten Large Language Model (B), einer Schnittstelle (IN/OUT) für die Kommunikation mit dem ersten Large Language Model (B) und dem zweiten Large Language Model (D),
der Datenbank (A) zur Speicherung von Prompts (E).

14. Computerprogramm (PROG), umfassend Befehle, die bei der Ausführung des Programms durch einen Computer diesen veranlassen, die Schritte des Verfahrens nach einem der Ansprüche 1 bis 11 auszuführen.

15. Computerlesbares Speichermedium (MEM, BE) mit einem Computerprogramm (PROG) nach Anspruch 14.

16. Übertragungssignal, das das Computerprogramm (PROG) nach Anspruch 14 überträgt.
